# EUROPÄISCHE PATENTANMELDUNG

(11) **EP 1 908 544 A2**
(43) Veröffentlichungstag der Anmeldung: **09.04.2008**
(21) Anmeldenummer: 07018842.0
(22) Anmeldetag: 25.09.2007
(51) Int. Cl.: B23K 26/04

(54) **Verfahren und Vorrichtung zum Laserstrahlbearbeiten**

(30) Priorität: 04.10.2006 DE 102006047277
(71) Anmelder: LT Ultra-Precision-Technology GmbH, 88634 Aftholderberg (DE)
(72) Erfinder: Bischof, Dietmar, 88697 Bermatingen (DE)
(74) Vertreter: Weiss, Peter

(57) **Zusammenfassung**

Bei einem Verfahren und einer geeigneten Vorrichtung hierfür zum Einhalten von Sollwerten im Zusammenhang mit einer Laserstrahlbearbeitung von Werkstücken wird vorgeschlagen, dass die Sollwerte mit Hilfe von mindestens einem Strahllagedetektor eingestellt werden, wobei dieser an einer geeigneten Stelle im Laserstrahlenverlauf angeordnet werden kann, der sich von einer Laserquelle über ein optisches System zur Strahlablenkung bis zum eigentlichen Bearbeitungskopf der Vorrichtung erstreckt.

## Beschreibung

Die Erfindung betrifft ein Verfahren zum Einhalten von Sollwerten bei einer Vorrichtung zur Laserstrahlbearbeitung sowie betrifft sie die Vorrichtung selbst.

Beim Laserstrahlbearbeiten von Werkstücken, wie beim Schweissen, Schneiden, Bohren usw. werden bekanntlich verfahrbare Bearbeitungsköpfe verwendet, in welche ein Laserstrahl durch ein Ablenksystem aus veränderbaren Spiegeln geleitet wird. Der Laserstrahl selbst wird dabei meistens von einer ortsfesten Laserquelle erzeugt und von dieser mittels der veränderbaren Spiegel zum Bearbeitungskopf geführt, wobei die Laserbearbeitung selbst nahezu verzugsfrei unter relativ geringer Wärmebildung und z. B. beim Schweissen ohne einen Einbrand erfolgt.

In der Regel wird eine punktgenaue Laserbearbeitung angestrebt, welche jedoch nicht immer einzuhalten ist, da z. B. der Bearbeitungskopf an einem Arm eines Roboters angeordnet sein kann, dessen mechanische Bewegungen Schwingungen verursachen können, wodurch die Istwerte von den Sollwerten des Laserstrahls als unerwünschter Nebeneffekt abweichen können.

Hier setzt die Erfindung ein, der die Aufgabe zugrunde liegt, ein Laserstrahlbearbeitungsverfahren und eine geeignete Vorrichtung zu dessen Durchführung zu schaffen, wodurch Sollwertabweichungen hinsichtlich der Laserstrahllage auf einfache Weise korrigiert werden können.

Diese Aufgabe wird zum einen vorteilhaft dadurch gelöst, dass die Sollwerte des zur Laserbearbeitung erzeugten Laserstrahls mit Hilfe mindestens eines Strahllagedetektor eingestellt werden. Dabei ist es zweckmässig, zuerst die Istwerte des Strahlengangs durch mindestens einen Strahllagedetektor zu ermitteln und dann diese mit den Sollwerten durch eine Verstellung des optischen Systems der Laserstrahlbearbeitungsvorrichtung abzugleichen, wobei als optisches System vorzugsweise eine räumliche Spiegelanordnung dienen kann.

Nach Massgabe der vorliegenden Erfindung ist es ferner zweckmässig, dass die durch den Strahllagedetektor ermittelten Sollwertabweichungen durch eine Veränderung von mindestens einem der Spiegel der Spiegelanordnung korrigiert werden, wobei vorteilhaft zumindest ein Teil der Korrektur der Sollwertabweichungen durch eine kardanische Kompensation der Spiegelachsen durchgeführt werden kann.

Es ist aber auch möglich, dass zumindest ein Teil der Korrektur der Sollwertabweichungen durch mindestens einen adaptiven Spiegel der Spiegelanordnung durchgeführt wird, wobei ferner zumindest ein Teil der Korrektur der Strahlabweichungen durch mindestens einen Strahlenkonus oder dgl. durchgeführt werden kann.

Zur Lösung der der Erfindung zugrunde liegenden Aufgabe ist ferner eine Vorrichtung zur Laserstrahlbearbeitung vorgesehen, mit welcher sich das erfindungsgemässe Verfahren vorteilhaft durchführen lässt, und zwar kann diese eine Laserquelle aufweisen und zwischen dieser und einem Bearbeitungskopf eine Spiegelanordnung mit insbesondere mehren Spiegeln, wobei vorteilhaft bei dieser Vorrichtung zwischen den Spiegeln der Spiegelanordnung mindestens ein Strahllagedetektor angeordnet sein kann.

Die Anordnung mindestens eines Strahllagedetektors kann zweckmässig in der Nähe des Laserstrahleingangs in den Bearbeitungskopf erfolgen, wobei eine Anordnung eines Strahllagedetektors auch wenigstens in dem Laserstrahlenverlauf zwischen einem mechanisch verstellbaren Spiegel und einem adaptiv verstellbaren Spiegel der Spiegelanordnung erfolgen kann.

Schliesslich kann es vorteilhaft sein, dass aufgrund mindestens eines Strahllagedetektors im Laserstrahlenverlauf der Spiegelanordnung eine Zentrierung des Laserstrahlenverlaufs zu den mechanischen Achsen der erfindungsgemässen Vorrichtung erfolgt bzw. einstellbar ist.

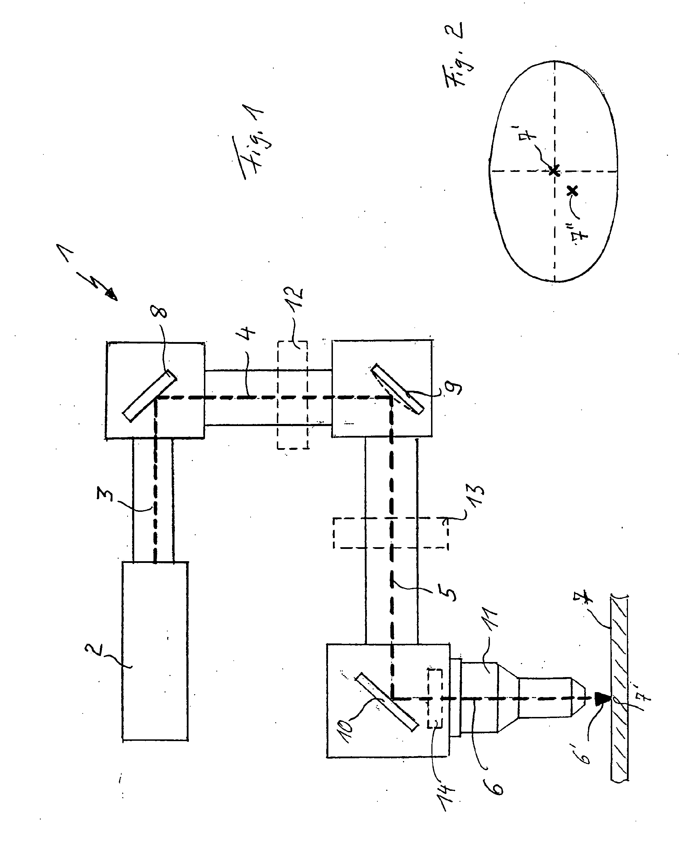

Weitere Merkmale und Vorteile der vorliegenden Erfindung ergeben sich aus der nachfolgenden Beschreibung eines Ausführungsbeispiels in Verbindung mit der Zeichnung, in der in Fig. 1 eine schematisch dargestellte Laserschweissvorrichtung mit im Laserstrahlenverlauf alternativ vorgesehenen Strahllagedetektoren und in Fig. 2 ein Ausschnitt einer Draufsicht auf den Bearbeitungsbereich des Laserstrahls gemäss Fig. 1 mit einer Sollwertabweichung gezeigt ist.

Die in Fig. 1 schematisch dargestellte Laserschweissvorrichtung 1 ist sowohl für Punktschweissen als auch für kontinuierliches Schweissen geeignet; sie ist nur als Beispiel zu betrachten, denn mit entsprechenden Laserstrahlbearbeitungseinrichtungen kann auch gebohrt, geschnitten, markiert, d. h. beschriftet, usw. werden.

Ausgehend von einer Laserquelle 2 trifft ein Laserstrahl unterteilt in Abschnitte 3 - 6 auf ein zu bearbeitendes Werkstück 7 und durchläuft dabei ein optisches System, welches zur Strahlenablenkung einen mechanisch verstellbaren Spiegel 8, einen adaptiv verstellbaren Spiegel 9 und abermals einen mechanisch verstellbaren Spiegel 10 aufweist. Aus einem Bearbeitungskopf 11 tritt dann ein fokussierter Laserstrahl 6' aus der Laserschweissvorrichtung 1 aus und trifft zur Laserbearbeitung bei 7' auf das Werkstück 7.

Um dann die je Bearbeitungsfall vorgegebenen Sollwerte (7' in Fig. 2) einhalten zu können, ist ferner mindestens ein gestrichelt dargestellter Strahllagedetektor 12 bzw. 13 bzw. 14 in dem Strahlenverlauf 4 - 6 des optischen Systems vorgesehen, wobei deren Zuordnung vom Einzelfall abhängt.

Mit Hilfe eines derartigen an sich bekannten Strahllagedetektors z. B. 13 werden die Istwerte des Strahlengangs in Abschnitt 5 ermittelt, d. h. gemessen und dann mit den jeweiligen Sollwerten durch eine Verstellung des Spiegels 10 abgeglichen. Hierbei besteht das optische System 8 - 10 aus einer räumlichen Spiegelanordnung. Mit anderen Worten: Die durch den Strahllagedetektor 12 bzw. 13 bzw. 14 ermittelten Sollwertabweichungen (7" in Fig. 2) werden durch eine Veränderung von mindestens einem der Spiegel 8 - 10 der Spiegelanordnung korrigiert. Hierbei kann die Korrektur zumindest zum Teil durch eine nicht im einzelnen dargestellte, jedoch kardanische Kompensation der Spiegelachsen erfolgen oder es kommt der adaptive Spiegel 9 zum Einsatz, welcher seine Oberflächenkrümmung verändern kann. Auch ist eine Korrektur einer Sollwertabweichung 7" durch einen an sich bekannten und deshalb nicht näher dargestellten Strahlenkonus oder dgl. möglich.

Zur Durchführung des erfindungsgemässen Verfahrens mit der erfindungsgemässen Laserschweissvorrichtung 1 wird durch die Laserquelle 2 ein Laserstrahl erzeugt, der in den Abschnitt 3 eintritt und auf den Spiegel 8 auftrifft. Von dem Spiegel 8 wird sodann der Laserstrahl um 90°abgelenkt und durchläuft den Laserabschnitt 4 bis er auf den adaptiv verstellbaren Spiegel 9 auftrifft, von wo er abermals um 90° abgelenkt wird und auf den Spiegel 10 auftrifft. Schliesslich gelangt der Laserstrahl vom Spiegel 10 abermals um 90° abgelenkt in den Bearbeitungskopf 11 von wo er dann fokussiert auf das Werkstück 7 zu dessen jeweiligen Bearbeitung bei 7' auftrifft.

Gleichzeitig misst der in diesem Fall im Strahlengang des Abschnitts 5 eingesetzte Strahllagedetektor 13 die jeweilige Lage des Laserstrahls, d. h. er ermittelt die jeweilige Sollwertabweichung 7" und sendet ein entsprechendes Signal an den für die jeweilige Abeichung zuständigen Spiegel, der dann aufgrund seines Verstellmechanismuses seine Ablenkung entsprechend so lange verändert bis der Sollwert 7' des Laserstrahles wieder hergestellt ist.

Insgesamt kann mit dem erfindungsgemässen Verfahren und der dazugehörenden Vorrichtung zum Einhalten von Sollwerten bei einer Laserstrahlbearbeitung vorteilhaft in einfacher Weise eine Sollwertkorrektur vorgenommen werden, wodurch unerwünschte Nebeneffekte wie Schwingungen, Toleranzen und dgl. ausgeglichen werden können.

**Bezugszeichenliste**

| | | | | | |
|---|---|---|---|---|---|
| 1 | Laserschweissvorrichtung | 34 | | 67 | |
| 2 | Laserquelle | 35 | | 68 | |
| 3 | Laserabschnitt | 36 | | 69 | |
| 4 | Laserabschnitt | 37 | | 70 | |
| 5 | Laserabschnitt | 38 | | 71 | |
| 6 | Laserabschnitt | 39 | | 72 | |
| 7 7' 7" | Werkstück Sollwert Sollwertabweichu ng | 40 | | 73 | |
| 8 | mech. Spiegel | 41 | | 74 | |
| 9 | adaptiver Spiegel | 42 | | 75 | |
| 10 | mech. Spiegel | 43 | | 76 | |
| 11 | Bearbeitungskopf | 44 | | 77 | |
| 12 | Strahllagedetektor | 45 | | 78 | |
| 13 | Strahllagedetektor | 46 | | 79 | |
| 14 | Strahllagedetektor | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Einhalten von Sollwerten bei einer Vorrichtung zur Laserstrahlbearbeitung, insbesondere bei einer Vorrichtung für das Laserschweissen, bei dem ausgehend von einer Laserquelle ein Laserstrahl mittels eines optischen Systems zur Strahlablenkung zum Bearbeitungskopf der Vorrichtung geführt wird,
**dadurch gekennzeichnet,**
**dass** die Sollwerte (7') mit Hilfe von mindestens einem Strahllagedetektor (12; 13; 14) eingestellt werden.

2. Verfahren nach Anspruch 1, **dadurch gekennzeichnet, dass** die Istwerte des Strahlengangs (3 - 6) durch mindestens einen Strahllagedetektor (12; 13; 14) ermittelt und dann mit den Sollwerten (7') durch eine Verstellung des optischen Systems (8-10) abgeglichen werden.

3. Verfahren nach Anspruch 1 oder 2, **dadurch gekennzeichnet, dass** als optisches System (8 -10) eine räumliche Spiegelanordnung verwendet wird.

4. Verfahren nach Anspruch 3, **dadurch gekennzeichnet, dass** die durch den Strahllagedetektor (12; 13; 14) ermittelten Sollwertabweichungen (7") durch eine Veränderung von mindestens einem der Spiegel (8 -10) der Spiegelanordnung korrigiert werden.

5. Verfahren nach einem der vorherigen Ansprüche, **dadurch gekennzeichnet, dass** zumindest ein Teil einer Korrektur der Sollwertabweichungen (7") durch eine kardanische Kompensation der Spiegelachsen durchgeführt wird.

6. Verfahren nach einem der vorherigen Ansprüche, **dadurch gekennzeichnet, dass** zumindest ein Teil einer Korrektur der Sollwertabweichungen (7") durch mindestens einen adaptiven Spiegel (9) der Spiegelanordnung durchgeführt wird.

7. Verfahren nach einem der vorherigen Ansprüche, **dadurch gekennzeichnet, dass** zumindest ein Teil einer Korrektur der Sollwertabweichungen (7") durch mindestens einen Strahlenkonus oder dgl. durchgeführt wird.

8. Vorrichtung insbesondere zur Durchführung des Verfahrens nach den Ansprüchen 1 bis 7, insbesondere zum Laserschweissen, mit einer Laserquelle und zwischen dieser und einem Bearbeitungskopf angeordneten Spiegelanordnung, **dadurch gekennzeichnet, dass** im Laserstrahlverlauf (3 - 6) zwischen den Spiegeln (8 - 10) der Spiegelanordnung mindestens ein Stahllagedetektor (12; 13; 14) angeordnet ist.

9. Vorrichtung nach Anspruch 8, **dadurch gekennzeichnet, dass** in der Nähe des Laserstrahleingangs in den Bearbeitungskopf (11) ein Strahllagedetektor (14) angeordnet ist.

10. Vorrichtung nach Anspruch 8, **dadurch gekennzeichnet, dass** wenigstens in dem Laserstrahlverlauf (4 bzw. 5) zwischen einem mechanisch verstellbaren Spiegel (8 bzw. 10) und einem adaptiv verstellbaren Spiegel (9) der Spiegelanordnung ein Strahllagedetektor (12 bzw. 13) angeordnet ist.

11. Vorrichtung nach Anspruch 8, **dadurch gekennzeichnet, dass** die Spiegel (8 - 10) der Spiegelanordnung mechanisch und/oder adaptiv aufgrund von Signalen mindestens eines im Laserstrahlverlauf (3 - 6) angeordneten Stahllagedetektors (12; 13; 14) verstellbar sind.

12. Vorrichtung nach einem der Ansprüche 8 bis 11, **dadurch gekennzeichnet, dass** aufgrund mindestens eines im Laserstrahlverlauf (3 - 6) der Spiegelanordnung angeordneten Strahllagedetektors (12; 13; 14) eine Zentrierung des Strahlverlaufs zu den mechanischen Achsen der Vorrichtung (1) einstellbar ist.
